# EUROPÄISCHE PATENTSCHRIFT

(11) **EP 2 179 650 B1**
(45) Veröffentlichungstag und Bekanntmachung des Hinweises auf die Patenterteilung: **16.03.2016**
(21) Anmeldenummer: 09172636.4
(22) Anmeldetag: 09.10.2009
(51) Int. Cl.: A01P 13/00, A01N 25/30, A01N 31/02, A01N 31/14, A01N 55/00, A01P 3/00

(54) **Nicht schäumende organische Tenside als Additive für Tankmischungszubereitungen im Pflanzenschutz**
Non-foaming organic tensides as additives for tank mixture preparations in plant protection
Tensioactifs organiques ne moussant pas comme additifs pour préparations de mélange de réservoir dans la protection des plantes

(30) Priorität: 27.10.2008 DE 102008043185
(43) Veröffentlichungstag der Anmeldung: 28.04.2010
(73) Patentinhaber: Evonik Degussa GmbH, 45128 Essen (DE)
(72) Erfinder: Giessler-Blank, Sabine, Dr., 44227 Dortmund (DE); Sieverding, Ewald, Dr., 55578 St. Johann (DE); Fleute-Schlachter, Ingo, Dr., 45239 Essen (DE)

(56) Entgegenhaltungen:
- EP-A1- 1 314 356
- EP-A2- 0 791 384
- WO-A1-98/35553
- WO-A1-03/090531
- WO-A2-2008/024308
- WO-A2-2008/037374
- JP-A- 2002 128 603

## Beschreibung

Die Erfindung betrifft den Einsatz von Additiven in Zubereitungen von Pflanzenschutzmittelspritzbrühen, insbesondere als Additive für Tankmischungen zu Pestiziden, Pestizidmischungen oder Pflanzenschutzmittel generell. Im Pflanzenschutz werden üblicherweise zur Verbesserung der Effizienz und der Wirksamkeit von Pflanzenschutzmittelwirkstoffen Additive, im Folgenden auch Adjuvantien oder auch Hilfsmittel genannt, eingesetzt. Diese werden entweder der wässrigen Spritzbrühe kurz vor dem Aussprühen separat vom Pflanzenschutzmittel zugesetzt (als Tankmischungsadditiv) oder direkt in das Pflanzenschutzmittelkonzentrat zusammen mit anderen Hilfsstoffen (Formulierung) eingebaut. Zur Anwendung kommen chemische oder biologische Pflanzenschutzmittel (im Folgenden auch Pestizide genannt) oder Pestizidgemische. Dieses können sein, zum Beispiel Herbizide, Fungizide, Insektizide, Wachstumsregulatoren, Molluskizide, Bakterizide, Viridizide Mikronährstoffe sowie biologische Pflanzenschutzmittel auf Basis von Naturstoffen oder lebenden oder ver- bez. bearbeiteten Mikroorganismen. Pestizide Wirkstoffe sind im Zusammenhang mit Ihren Einsatzgebieten z. B. im 'The Pesticide Manual', 14th edition, 2006, The British Crop Protection Council, aufgelistet; biologische Wirkstoffe sind z.B. im 'The Manual of Biocontrol Agents', 2001, The British Crop Protection Council angegeben.

Als Tankmischungsadditive werden vielfach alkoxylierte Trisiloxantenside eingesetzt, die die statische Oberflächenspannung von Spritzbrühen oder Wasser signifikant stärker erniedrigen, als organische Tenside. Diese Trisiloxantenside haben die Struktur Me₃O-SiMeR-OSiMe₃, wobei der Rest R ein Polyetherradikal darstellt. Die Verwendung dieser superspreitenden Trisiloxantenside, wie z.B. dem BREAK-THRU^{®} S-240, Evonik Goldschmidt GmbH, in Kombination mit einem Pestizid führt zu einer Verbesserung der Pestizidaufnahme durch die Pflanze und allgemein zu einer Steigerung von dessen Wirksamkeit oder dessen Effizienz. In US 6,734,141 wird beschrieben, dass für diese Effizienzsteigerung speziell eine geringe Oberflächenspannung und nicht unbedingt die Spreitung verantwortlich ist. In den meisten Patenten wird unter dem Begriff Oberflächenspannung immer die statische Oberflächenspannung verstanden. Für eine erhöhte Retention des Wirkstoffes auf dem Blatt ist allerdings die dynamische Oberflächenspannung, die bei einer Blasenverweildauer von ca. 30ms gemessen wird, entscheidend. Die statische Oberflächenspannung hingegen wird bei ca. 5000ms gemessen. Die Oberflächenspannung der Spritzbrühen ist hier auf die Messung mittels Blasendrucktensiometers bezogen (bubble pressure tensiometer Sita online t 60). Bei Trisiloxanen liegt die dynamische Oberflächenspannung bei etwa 60 mN/m, die statische hingegen bei ca. 21 mN/m.

Im Hinblick auf ein zunehmendes Umweltbewusstsein sind Trisiloxantenside aufgrund ihrer geringen biologischen Abbaubarkeit in den letzten Jahren zunehmend in die Kritik geraten. Zudem sind Trisiloxantenside als gesundheitsschädlich eingestuft. Ein weiterer Nachteil vieler Tankmischungsadditive, speziell von alkoxylierten Trisiloxanen ist, dass sie Spritzbrühen beim Einrühren stark zum Schäumen bringen.

In der Fachliteratur sind organische Tenside, die die oben erwähnten Nachteile nicht mit sich führen, bekannt. Meistens werden diese jedoch als Additive für Wirkstoffkonzentrate und konzentrierte Zusammensetzungen und speziell als Dispergiermittel, eingesetzt. So zeigt die EP 1 313 792 Verbindungen mit mindestens 3 Ethylenoxid- und 4 Propylenoxideinheiten, deren statische Oberflächenspannung größer als 30 mN/m ist.

In EP 0 959 681 werden wässrige agrochemische Zusammensetzungen mit alkoxylierten primären und sekundären Alkoholen beschrieben, die statische Oberflächenspannungen von mehr als 30 mN/m aufweisen.

JP 2002-128603 beschreibt ausschließlich ethoxylierte Spreiter mit einer statischen Oberflächenspannung von 30-45 mN/m, die stark zu Schäumung neigen.

WO 98/35553 A1, EP 0 791 384A1 und WO 03/090531 A1 beschreiben ebenfalls jeweils Formulierungen von Pflanzenschutzmitteln mit Adjuvantien.

Weitere im Agrobereich weit verbreitete Netzmittel wie zum Beispiel Nonylphenolethoxylate (NPE) oder Talgaminethoxylate (TAE) stehen seit längerer Zeit wegen ihrer schlechten Toxizität in der Diskussion bzw. wurden in zahlreichen Ländern schon als Pestizidzusatz verboten. NPE's werden vornehmlich als Tenside und Emulgatoren eingesetzt. Durch biologischen Abbau werden die nur schwer abbaubaren Nonylphenole (NP) gebildet. Sie gelangen über industrielle und kommunale Abwässer in die Gewässer. TAE's stehen aufgrund Ihrer Kennzeichnung zu irreversibler Augenschädigung in der Diskussion. Ebenso führen sie zu Hautreizungen und die Fisch- und Algentoxizitäten weisen Werte kleiner 1 auf. Die akute orale Toxizität bei Ratten liegt unter dem Wert von 4000 mg/kg, der für grüne Label angesehen wird, nämlich nur bei 200-2000 mg/kg.

Pflanzenschutzmittelformulierungen, welche Produkte darstellen, die für ihre Anwendung meist vor dem üblichen Aussprühen über Düsen mit Wasser verdünnt werden, enthalten neben der wirksamen Komponente (Aktivstoff oder auch Wirkstoff genannt) auch andere Hilfsmittel, wie Emulgatoren, Dispergierhilfsstoffe, Antifrostmittel, Entschäumer, Biozide und oberflächenaktive Substanzen; dem Formulierungsfachmann sind solche Stoffe bekannt. Solche Pflanzenschutzmittel werden oft einem Tank mit Wasser als Inhalt zugegeben, um die konzentrierte Formulierung vor dem Aussprühen zu verdünnen und den Pflanzen verträglich zu machen. Tankmischungsadditive (auch Zusatzstoffe oder Adjuvantien genannt) werden dem Wasser in demselben Tank separat vor oder nach der Pflanzenschutzmittelformulierung zugegeben und werden über Rühren mit der gesamten Spritzbrühe verteilt.

Aktivstoffe sind solche, die in den individuellen Ländern für die Anwendung zu Pflanzen und Kulturen zugelassen und oder registriert und oder gelistet sind, um Pflanzen gegen Schaden zu schützen, oder um den Ertragsverlust bei einer Kultur zu vermeiden. Solche Aktivstoffe oder Wirkstoffe können synthetischer Art, wie auch biologischer Art sein. Solche Wirkstoffe können auch Extrakte sein, oder Naturstoffe, oder antagonistisch aktive Organismen. Sie werden gewöhnlich auch als Pestizide bezeichnet. In dieser hier vorliegenden Erfindung kommt es nicht auf die Art des Wirkstoffes an, da die Verwendung als Tankmischungsadditiv allgemeiner Natur ist und nicht spezifisch auf den Wirkstoff bezogen ist. Die Pestizide, die nach ihrem Anwendungsgebiet im Pflanzenschutz benannt sind, schließen folgende Klassen ein: alle Akarizide (AC), Algizide (AL), Attraktanzien (AT), Repellentien (RE), Bakterizide (BA), Fungizide (FU), Herbizide (HE), Insektizide (IN), Mittel gegen Schnecken (Molluskizide, MO), Nematizide (NE), Rodentizide (RO), Sterilisierungsmittel (ST), Viridizide (VI), Wachstumsregulatoren (PG), Pflanzenstärkungsmittel (PS), Mikronährstoffe (MI) und Makronährstoffe (MA). Diese Bezeichnungen und die Anwendungsgebiete sind dem Fachmann bekannt. Wirkstoffe werden allein oder in Kombinationen mit anderen Wirkstoffen eingesetzt. Bevorzugte Pestizide sind HB, FU, IN, PG, MI und besonders HB, FU, IN.

Einige Wirkstoffe oder Wirkorganismen sind beispielhaft im 'The Pesticide Manual', 14th edition, 2006, The British Crop Protection Council, oder in 'The Manual of Biocontrol Agents', 2004, The British Crop Protection Council aufgelistet. Die vorliegende Anmeldung beschränkt sich jedoch nicht nur auf diese dort aufgeführten Wirkstoffe, sondern schließt auch modernere, in der zuvor genannten Monographie noch nicht zitierte Wirkstoffe mit ein.

Aus der Gruppe der Herbizide beispielhaft aber nicht begrenzt auf diese, sind Produkte mit folgenden Wirkstoffen oder Wirkstoffmischungen: Acetochlor, Acifluorfen, Aclonifen, Acrolein, Alachlor, Ametryne, Amitrole, Asulam, Atrazine, Benazolin, Bensulfuronmethyl, Bentazon, Benzofenap, Bialaphos, Bifenox, Bromacil, Bromobutide, Bromofenoxim, Bromoxynil, Butachlor, Butafenacil, Chlomethoxyfen, Chloramben, Chloroessigsäure, Chlorbromuron, Chlorimuron-ethyl, Chlorotoluron, Chlomitrofen, Chlorotoluron, Chlorthaldimethyl, Clomazone, Clodinafop, Clopyralid, Clomeprop, Cyanazine, 2,4-D, 2,4-DB, Dimuron, Dalapon, Desmedipham, Desmetryn, Dicamba, Dichlobenil, Dichloroprop, Diclofop, Difenzoquat, Diflufenican, Dimefuron, Dimethachlor, Dimethametryn, Dimethenamid, Dinitramine, Diquat, Diuron, Endothall, Ethametsulfuron-methyl, Ethofumesan, Fenac, Fenclorim, Fenoxaprop, Fenoxaprop-ethyl, Flamprop-methyl, Flazasulfuron, Fluazifop, Fluazifop-p-butyl, Flumetsulam, Flumiclorac-penyl, Fluoroglycofen, Flumetsulam, Flumeturon, Flumioxazin, Flupoxam, Flupyrsulfuron, Flupropanate, Fluridone, Fluroxypyr, Flurtamone, Fomasafen, Fosamine, Glufosinate, Glyphosate und seine Salze, (beispielsweise Alkylammonium oder Alkalimetallsalze), Haloxyfop, Imazameth, Imazamethabenz, Imazamox, Imazapic, Imazapyr, Imazaquin, Imazethapyr, Iodosulfuron, Ioxynil, Isoproturon, Isoxaben, Isoxapyrifop, Lactofen, Lenacil, Linuron, MCPA, MCPB, Mecoprop, Mefenacet, Mesotrione, Metazachlor, Methabenzthiazuron, Metalachlor, Methylarsensäure, Metolachlor, Metobenzuron, Metosulam, Mesosulfuron, Metamitron, Metsulfuron, Naproanilide, Naptalam, Neburon, Nicosulfuron, Nonansäure, Norflurazon, Oryzalin, Oxadiazon, Oxyfluorfen, Paraquat, Pendimethalin, Phenmedipham, Picloram, Picolinafen, Pretilachlor, Prodiamine, Prometon, Prometryn, Propachlor, Propazine, Propisochlor, Propyzamide, Pyrazolynate, Pyrazosulfuronethyl, Pyributicarb, Pyridat, Quinclorac, Quizalofopethyl, Quizalofop-P, Quinclorac, Rimsulfuron, Siduron, Simazine, Simetryn, Sulfamsäure, Sulfonylharnstoff, 2,3,6-TBA, Terbumeton, Terbuthylazine, Terbutryn, Trichloroessigsäure, Triclopyr, Trietazine, Thenylchlor, Thiazopyr, Tralkoxydim, Trifuralin, Tritosulfuron, sowie deren Salze und Mischungen hiervon.

Beispiele von aktiven Fungizidwirkstoffen, die in Pflanzenschutzmittelprodukten allein oder in Mischung mit anderen Wirkstoffen kombiniert sind, sind:
Azoxystrobin, Benalaxyl, Benomyl, Bitertanol, Borax, Bromocuonazole, sec-Butylamin, Captafol, Captan, Calciumpolysulfid, Carbendazim, Chinomethionat, Chlorothalonil, Chlozolinate, Kupfer und seine Derivate, Kupfersulfat, Cyprodinil, Cyproconazole, Dichlofluanid, Dichlorophen, Diclomezine, Dicloran, Diethofencarb, Difenoconazole, Dimethomorph, Diniconazole, Dithianon, Epoxiconazol, Famoxadone, Fenarimol, Fenbuconazol, Fenfuram, Fenhexamid, Fenpiclonil, Fenpropidin, Fenpropimorph, Fentin, Fluazinam, Fludioxonil, Fluoroimide, Fluqinconazole, Flusulfamide, Flutolanil, Folpet, Fosetyl, Furalaxyl, Guazatine, Hexachlorobenzen, Hexaconazole, Hydroxyquinolinsulfate, Imibenconazole, Iminoctadine, Ipconazol, Iprodione, Kasugamycin, Kresoxim-methyl, Mancozeb, Maneb, Mefenoxam, Mepanipyrim, Mepronil, Quecksilberchlorid, Metam, Metalaxyl, Metconazole, Metiram, Nabam, Nickel-bis(dimethyldithiocarbamat), Nuarimol, Oxadixil, Oxine-Kupfer, Oxolinsäure, Penconazole, Pencycuron, Picoxystrobin, Phthalide, Polyoxin B, Prochloraz, Procymidone, Propamocarb, Propiconazole, Propineb, Pyrifenox, Pyraclostrobin, Pyroquilon, Quintozene, Spiroxamine, Schwefel, Tebuconazol, Tecloftalam, Tecnazene, Thiabendazol, Thifluzamid, Thiophanate-methyl, Thiram, Tolclofos-methyl, Tolylfluanid, Triadimefon, Triadimenol, Triazoxide, Trifloxystrobin, Triforin, Triticonazol, Vinclozolin, Zineb, Ziram, deren Salze sowie deren Mischungen.

Beispiele von aktiven Wirkstoffen (allein oder in Mischungen) von Insektiziden sind: Abamectin, Acephate, Acetamiprid, Acrinathrin, Amitraz, Azadirachtin, Azamethiphos, Azinphos-methyl, Azocyclotin, Bensultap, Bifenthrin, Bromopropylat, Buprofezin, Butoxycarboxim, Cartap, Chlorfenapyr, Chlorfenson, Chlorfluazuron, Clofentezine, Coumaphos, Cyfluthrin, beta-Cyfluthrin, lambda-Cyhalothrin, Cypermethrin, alpha-Cypermethrin, theta-Cypermethrin, Cyromazine, DDT, Deltamethrin, Diafenthiuron, Dicofol, Dicrotophos, Difenthiuron, Diflubenzuron, Dimethoat, Emamectinbenzoat, Endosulfan, Esfenvalerate, Etoxazol, Fenazaquin, Fenbutatinoxid, Fenoxycarb, Fenpyroximat, Fipronil, Fluazuron, Flucycloxuron, Flufenoxuron, tau-Fluvalinate, Formetanate, Furathiocarb, Halofenozide, gamma-HCH, Hexaflumuron, Hexythiazox, Hydramethylnon, Cyanwasserstoff, Imidacloprid, Lufenuron, Methamidophos, Methidathion, Methiocarb, Methomyl, Methoxychlor, Mevinphos, Milbemectin, Mineralöle, Monocrotophos, Nicotin, Nitenpyram, Novaluron, Omethoate, Organophosphor-Verbindungen, Oxamyl, Oxydemeton-methyl, Pentachlorophenol, Phosphamidon, Pymetrozin, Permethrin, Profenofos, Pyridaben, Rapssamenöl, Resmethrin, Rotenone, Spinosad, Sulfluramid, Tebufenozide, Tebufenpyrad, Tebupirimfos, Teflubenzuron, Tetrachlorvinphos, Tetradifon, Tetramethrin, Thiamethoxam, Thiocyclam, Thiodicarb, Tralomethrin, Trichlorfon, Friflumuron, Trimethacarb, Vamidothion, sowie deren Salze und Mischungen hiervon.

Beispiele von aktiven Wirkstoffen in Produkten aus der Gruppe der Wachstumsregulatoren sind: 6-Benzylaminopurine, Chlormequat, Chlorphonium, Cimectacarb, Clofencet, Cloxyfonac, Cyanamide, Cyclanilide, Daminozide, Dikegulac, Ethephon, Flumetralin, Forchlorfenuron, Gibberilinsäure, Inabenfide, Indolylbutyronsäure, 2-(1-Naphthyl)acetamid, Mepiquat, Paclobutrazol, N-Phenylphthalaminsäure, Thidiazuron, Trinexapac-ethyluniconzole, sowie deren Salze und Mischungen hiervon.

Produkte mit Naturstoffcharakter, oder biologische Produkte sind in der oben genannten Schrift aufgeführt. Pflanzennährstoffe und Pflanzenmikronährstoffe, die in flüssiger Zubereitung in den unterschiedlichsten Formen allein oder in Kombination mit anderen Nährstoffen oder in Kombination mit Pflanzenschutzmitteln flüssig ausgebracht werden sind beispielhaft Stickstoff, Phosphat, Kalium, Calcium, Magnesium, Mangan, Bor, Kupfer, Eisen, Selen, Kobalt, und weitere, die unter der Bezeichnung Mikronährstoffe bekannt sind.

Es besteht daher ein Bedarf an Substanzen, die eine sehr niedrige dynamische Oberflächenspannung aufweisen, wenig schäumen, toxikologisch unbedenklich sind, wasserlöslich bzw. dispergierbar sind und als Tankmischungsadditiv bei Konzentrationen zwischen 0,001 bis 0,5 Vol.-%, bevorzugt 0,001 bis 0,39 Vol.-% und besonders bevorzugt unter 0,001 bis 0,1 Vol.-% (ca. entsprechend auch 0,1 Gew-%) der Spritzbrühe eingesetzt werden können. Dieses ist gleichbedeutend mit 10 bis 1.000 ml/ha, und bevorzugt eine Menge von 50 bis 500 ml/ha, die den jeweiligen Spritzbrühmengen unabhängig von der Gesamtwasseraufwandmenge pro ha zugesetzt werden.

Aufgabe der vorliegenden Erfindung war deshalb die Bereitstellung von alternativen, organischen Tensiden, die für die Anwendung als Tankmischungsadditiv in Spritzbrühen geeignet sind, toxikologisch unbedenklich sind, in Spritzbrühen keinen Schaum erzeugen und eine wesentlich verringerte dynamische Oberflächenspannung in Wasser erzeugen, als Trisiloxan-Tenside. Diese verringerte dynamische Oberflächenspannung sollte insbesondere bei Konzentrationen kleiner 0,1 Gew.-%, gleichbedeutend mit 0,1 Vol.-%, eintreten.

Im Rahmen der Erfindung wurden zahlreiche organische Tenside getestet, von denen sich überraschenderweise speziell alkoxylierte Alkohole als geeignet erwiesen. Dabei erwies sich der Startalkohol für die Herstellung des alkoxylierten Alkohols neben dem Alkoxylierungsgrad als entscheidendes Merkmal.

Die Struktur der Substanz, die der Erfindung zur Beantwortung der Aufgabenstellung zugrunde liegt, kann wie folgt beschrieben werden:
Alkoxylierte Alkohole der Formel

   R¹O(SO)ₐ(PO)_{b}(EO)_{c}(BO)_{d}R² (Formel 1)

   wobei
   SO = styryloxy = -CH(C₆H₅)-CH₂-O- oder -CH₂-CH(C₆H₅)-O-
   PO = propylenoxy = -CH(CH₃)-CH₂-O- oder -CH₂-CH(CH₃)-O-
   EO = ethylenoxy = -CH₂-CH₂-O-
   BO = butylenoxy = -CH₂-CH₂-CH₂-CH₂-O-
   a = 0,
   b = 2 bis 3,
   c = 2 bis 4,5 und
   d = 0 ist und
   R¹ ein 3,5,5-Trimethylhexyl-Radikal ist und
   R² ein Wasserstoffrest ist.

Hierbei ist bevorzugt das EO im Block endständig ist, wobei es auch möglich ist das der PO Block endständig ist.

Bei der erfindungsgemässen Struktur liegt die dynamische Oberflächenspannung bei einer Blasenverweildauer von 30 ms in 0,1 Gew.-%igen wässrigen Lösung bei kleiner 35,3 mN/m, und die statische Oberflächenspannung bei einer Blasenverweildauer von 5.000 ms bei kleiner 28 mN/m.

Als weiterhin vorteilhaft zeigten sich auch Gemische von Verbindungen nach Formel 1 und Polysiloxanen der allgemeinen Formel 2. 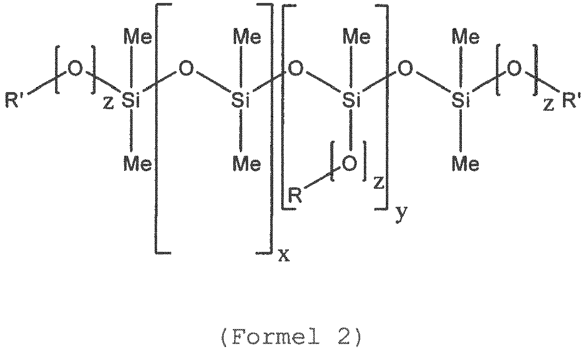 wobei
z = 0 oder 1,
x = 0 bis 100,
y bevorzugt größer, oder gleich 0,
R'= R oder ein Alkylrest mit 1 bis 8 Kohlenstoffatomen ist, oder ein Wasserstoffatom
R = CₙH₂ₙO(CₑH2ₑO)ₚK
N = 3 bis 4,
e = gleich oder unterschiedlich 2 bis 4,
p = größer gleich 3,
K = gleich H, ein Alkylrest mit 4 oder weniger Kohlenstoffatomen ist.

Die Mischung der Komponenten der Formeln 1 und 2 liegt hier im Verhältnis 90:10 bis 10:90, besonders jedoch 80:20 bis 50:50.

So können die erfindungsgemäßen Verbindungen entsprechend der Formel 1 allein, sowie deren Mischung mit einem Polysiloxan der Formel 2 bei Anwendungskonzentrationen von 0,001 bis 0,5 Vol-%, bevorzugt von 0,001 bis 0,39 Vol-% in Wasser und besonders bevorzugt von 0,05 bis 0,15 Vol-% (entsprechend auch Gew.-%), niedrige dynamische sowie niedrige statische Oberflächenspannungen ohne Auftreten von Schaum erzielen.

Dies entspricht einer Wirkstoffkonzentration von 10 bis 1.000 ml/ha in der Spritzbrühe.

Gegenstand der Erfindung ist somit die Verwendung von alkoxylierten Alkoholen der Formel

R¹O(SO)ₐ(PO)_{b}(EO)_{c}(BO)_{d}R² (Formel 1)

wobei
SO = styryloxy = -CH(C₆H₅)-CH₂-O oder -CH₂-CH(C₆H₅)-O-,
PO = propylenoxy = -CH(CH₃)-CH₂-O oder -CH₂-CH(CH₃)-O-,
EO = ethylenoxy = -CH₂-CH₂-O-,
BO = butylenoxy = -CH₂-CH₂-CH₂-CH₂-O-,
a = 0,
b = 2 bis 3,
c = 2 bis 4,5 und
d = 0 ist und
R¹ ein 3,5,5-Trimethylhexyl-Radikal ist und
R² ein Wasserstoffrest ist.

Hierbei ist bevorzugt das EO im Block endständig ist, wobei es auch möglich ist das der PO Block endständig ist.

Das erfindungsgemäße Tankmischungsadditiv eignet sich in Tankmischungen mit Pflanzenschutzmitteln für alle Pflanzen, es zeichnet sich aber besonders in seiner Wirksamkeit bei Anwendung auf Gräser aus.

Vorteilhaft wird das Tankmischungsadditiv zusammen mit Herbiziden, Fungiziden, Mikronährstoffen oder Insektiziden eingesetzt.

Die erfindungsgemäßen Zusammensetzungen enthaltend Verbindungen nach Formel 1, zeichnen sich weiterhin besonders dadurch aus, dass sie beim Einsatz als Tankmischungsadditiv in Spritzbrühen keinen Schaum verursachen.

Weiterhin bilden die erfindungsgemäßen Zusammensetzungen enthaltend Verbindungen nach Formel 1 beim Einsatz als 0,01 bis 0,5 Gew.-%ige wässrige Lösung, gleichbedeutend mit 50 bis 500 ml/ha in der Spritzbrühe, keine Mizellen aus.

Ein weiterer Gegenstand der Erfindung sind Zusammensetzungen enthaltend Verbindungen der Formel 1 sowie Polysiloxane der allgemeinen Formel 2 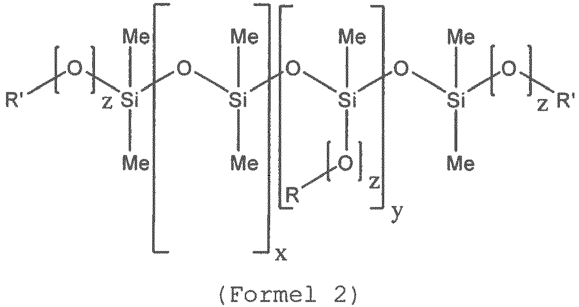 wobei
z = 0 oder 1,
x = 0 bis 100,
y = besonders größer oder auch gleich 0,
R'= R oder ein Alkylrest mit 1 bis 8 Kohlenstoffatomen ist, oder ein Wasserstoffatom
R = CₙH₂ₙO(CₑH₂ₑO)ₚK
n = 3 bis 4,
e = gleich oder unterschiedlich 2 bis 4,
p = größer gleich 3,
K = gleich H, ein Alkylrest mit 4 oder weniger Kohlenstoffatomen ist.

Zu den Polysiloxanen der Formel 2 zählen insbesondere auch hydrophile Polysiloxane.

In diesen Mischungen beträgt das Masse-Mischungsverhältnis der Komponenten 90:10 bis 10:90 (Formel 1: Formel 2) bevorzugt jedoch 50:50 bis 80:20. Die Mischungen sollten eine Viskosität von max. 1.000 mPas aufweisen.

Besonders vorteilhaft lassen sich die Zusammensetzungen bestehend aus Mischungen von Verbindungen der Formel 1 und der Formel 2 als Tankmischungsadditive für die Anwendung mit Herbiziden, Fungiziden oder Insektiziden auf Gräsern oder Getreide verwenden.

Die erfindungsgemäßen Zusammensetzungen können auch besonders vorteilhaft zusammen mit Mikronährstoffen, wie zum Beispiel Eisendünger, Stickstoffdünger, Spurenelementnährstoffen auf Basis von Cu, Fe, Zn, Mn, die beispielsweise als Oxide, Sulfate oder Carbonate vorliegen, verwendet werden.

Weitere Gegenstände der Erfindung ergeben sich aus den Ansprüchen, die vollständig Bestandteil des Offenbarungsgehalts dieser Beschreibung sind.

Die erfindungsgemäßen Formulierungen und das Verfahren zu deren Herstellung werden nachfolgend beispielhaft beschrieben, ohne dass die Erfindung als auf diese beispielhaften Ausführungsformen beschränkt angesehen werden kann. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können.

### Experimenteller Teil:

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, als auf die in den Beispielen genannten Ausführungsformen beschränkt gelesen werden kann.

Für die zugrundeliegenden Strukturen wurden nach CIPAC Methode MT 47 das Schaumverhalten in wässrigen Lösungen, die statische und dynamische Oberflächenspannung in 0,1 Gew.-%igen wässrigen Lösungen sowie die kritische Mizellbildungskonzentration gemessen. Die Oberflächenspannung der 0,1 Gew.-%igen Lösungen wurde mittels eines Blasendrucktensiometers der SITA Messtechnik GmbH, Gerät Sita online t 60; SITA online Version 2,0 gemessen. Blasenverweildauer der dynamischen Oberflächenspannung ist bei 5.000 ms gefunden, der statischen bei 30 ms. Die Messabweichung liegt bei ca. 0,4 bis 1 % der angegeben mN/m-Werte. Die Messungen wurden bei einer Umgebungstemperatur von 21,6 °C durchgeführt. Die aufgezeigten Werte sind Mittelwerte aus 5 Messungen.

Laut Definition von CIPAC gelten als "nicht schäumend" Produkte, die lediglich einen Schaum von 5 mL im Messkolben bei der angegebenen Methode erzeugen und "schäumend" solche, die Werte von > 20 mL aufzeigen.

Bei niedrigen Tensidkonzentrationen bilden sich an der Wasseroberfläche Adsorptionsschichten. Infolgedessen fällt mit zunehmender Konzentration des Tensids die Oberflächenspannung ab, bis die Tensidmoleküle in der Adsorptionsschicht dicht gepackt sind. Ist die Adsorptionsschicht mit Unimeren gesättigt, kann die Oberflächenspannung nicht mehr abfallen. Die dazugehörige Konzentration ist identisch mit der kritischen Mizellbildungskonzentration (cmc), also mit der Konzentration die sich am Knickpunkt einer Oberflächenspannungsfunktion befindet. Ab dieser Konzentration bilden sich in der Volumenphase aus Unimeren mizellare Aggregate.

Die Funktion stellt die Abhängigkeit der Oberflächenspannung von der Konzentration der Tensidlösung dar. Die Messungen der statischen Oberflächenspannungen an den vorliegenden Tensidlösungen in dest. Wasser wurden aufgrund notwendig hoher Genauigkeit mit der Methode des hängenden Tropfens gemessen.

Die resultierenden cmc-Werte sind in Tabelle 1 aufgeführt. Normalerweise werden cmc-Werte mit der Wilhelmyplattenmethode EN 14370 bestimmt. Für diese Bestimmungsmethode muss die zu analysierende Flüssigkeit die Platte vollständig benetzen. Der Nachteil ist, dass speziell Netzmittel mit hydrophoben Anteilen sich auch an der Platte adsorbieren und so die Platte hydrophobieren, d.h. es werden falsche Oberflächenspannungswerte (meist zu niedrig) bestimmt.

Die dieser Erfindung zugrunde liegenden Werte wurden mittels der Methode des hängenden Tropfens ermittelt, wobei für die Bestimmung der Oberflächenspannung immer eine frische Oberfläche erzeugt wird. Daher kann dieses Phänomen nicht auftreten. Das verwendete Gerät war ein *OCA 30* by DataPhysics (DataPhysics Instruments GmbH, Filderstadt, Germany) mit sechsfachen Zoom-Linsen. Das Analysegerät war mit einem Hochgeschwindigkeitsvideosystem mit CCD-Kamera und einer Auflösung von 768 x 576 bei 132 Mbytes/s ausgestattet. Die Messgenauigkeit, die von DataPhysics angegeben wird, beträgt 0,05 mN/m.

Gemessen wurde neben der Oberflächenspannung auch die Fähigkeit der Additive bzw. der neuen Additivmischungen, einen Wassertropfen von 50 µl Volumen auf einer Polypropylenoberfläche zu spreiten. Die Vorgehensweise bei diesem Spreitungstest ist von Venzmer et al (J. Venzmer and S.P. Wilkowski: Trisiloxane Surfactants - Mechanisms of Wetting and Spreading, in: J.D. Nalewaja, G.R. Gross and R.S. Tann (eds.): Pesticide Formulations and Application Systems, Volume 18, ASTM Spec. Tech. Publ. 1347, American Society for Testing and Materials, 1998, 140-151) beschrieben; die Spreitung zeigt, wie groß die Zieloberfläche von einem 50 µl großen Tropfen abgedeckt werden kann, der das Additiv in einer Konzentration von 0,1 Gew,% enthält.

**Tabelle 1:**

| Physikalische Charakterisierung alkoxylierter Alkohole gemäß Formel 1 und deren Gemisch mit Polysiloxanen der Formel 2 im Vergleich zum Trisiloxan BREAK-THRU^{®} S240 | | | | |
|---|---|---|---|---|
| | Vergleichsversuch 1 BREAK-THRU^{®} S240 | Struktur nach Formel | Formel 2 | Mischung Formel 1 und 2 (70:30) |
| Statische Oberflächenspannung [mN/m] 0,1 Gew.-% | 21,1 | 27 | 43,9 | 30 |
| Dynamische Oberflächenspannung [mN/m] 0,1 Gew.-% | 68 | 35,1 | 50,7 | 41 |
| Schaum mL | 220 | 5 | 5 | 5 |
| Spreitung mm | 70 | 15 | 5 | 14 |
| cmc | 0,01 Gew.-% | > 0,5 Gew.-% | - | > 1 Gew.-% |

Als Tankmischungsadditive wurden hier ein Produkt nach Formel 1, wobei 3,5,5-Trimethylhexanol als Startalkohol verwendet wurde, und eine Mischung von 70 Teilen aus Formel 1 und 30 Teilen einer Verbindung gemäß Formel 2, wobei die Verbindung gemäß Formel 2 ein hydrophiles Polysiloxan ist, zum kommerziellen Tankmischungsadditiv BREAK-THRU^{®} S240 verglichen.

Aus Tabelle 1 ist zu erkennen, dass bei Anwendungskonzentrationen, bei denen Tankmischungsadditive verwendet werden, nämlich 0,01 bis 0,3 Gew.-%, Strukturen nach Formel 1 im Vergleich zu Trisiloxanen (s. BREAK-THRU^{®} S240) keine Mizellen bilden und daher auch eine sehr geringe dynamische Oberflächenspannung aufzeigen.

Ebenso sind mit tertiären Alkoholen gestartete alkoxylierte Strukturen nach Formel 1 oder auch Gemische mit Strukturen der Formel 2 nicht schäumend.

So zeigt die erfindungsgemäße Verbindung nach Formel 1 überraschenderweise erst bei einer Konzentration von größer oder gleich 0,5 Gew.-% die Ausbildung von mizellartigen Strukturen, einer Konzentration die außerhalb der normalen Anwendungskonzentration von Trisiloxantankmischungsadditiven liegt.

### Beispiel 1:

Feldversuch - Effektivitätssteigerung eines Herbizids gegen Gräser durch die erfindungsgemässe Struktur im Vergleich zu dem Trisiloxan BREAK-THRU^{®} S240:
In einem Feldversuch mit Winterweizen wurden Parzellen von 15 m² in 4 mal wiederholten Blöcken randomisiert verteilt. Die vier Parzellen wurden im Wachstumsstadium 24 (BBCH Skala)des Winterweizens mit dem Herbizid Ralon Super (EW 63 g/l Fenoxaprop P, Nufarm Deutschland GmbH) und den in Tabelle 2 angegebenen Netzmitteln besprüht. Nicht behandelte Parzellen wurden ebenfalls angelegt. Zum Spritzzeitpunkt war das nicht erwünschte schädliche Ungras *Alepecurus myosuroides* (Ackerfuchsschwanz) dominant im Bestand. Die Produkte wurden mit Wasser verdünnt und mit einer Wassermenge von 200 l/ha mittels einer Düse bei einem Druck von 1,5 bar ausgebracht. Das Herbizid Ralon Super, welches dafür bekannt ist, dass es nur einkeimblättrige unerwünschte Gräser bekämpft, aber nicht dem Weizen schadet, wurde mit einer Aufwandmenge von 0,8 l/ha ohne und mit dem kommerziell erhältlichen Netzmittel BREAK-THRU^{®} S240 (organo-modifiziertes Trisiloxan der Evonik Goldschmidt GmbH) sowie der erfindungsgemäßen Substanz jeweils in Höhe von 0,15 l/ha appliziert. Der Grad der Ungrasbekämpfung wurde 35 Tage nach der Behandlung in der dem Fachmann bekannten Weise bestimmt, indem die Ungrasbiomasse in den behandelten Parzellen zur Unkrautbiomasse in unbehandelten Parzellen ins Verhältnis gesetzt wurde, und dabei der Wirkungsgrad in Prozent geschätzt wurde. Die auf 4 Wiederholungen gemittelte Wirksamkeit der Ungrasbekämpfung ist in Tabelle 2 angegeben. Die Wirksamkeitsangaben mit verschiedenen Buchstaben a und b unterscheiden sich statistisch signifikant mit P = 0,05 %; solche Werte mit demselben Buchstaben unterscheiden sich statistisch nicht. Die Ergebnisse zeigen, dass erfindungsgemäße Verbindung der allgemeinen Formel 1 signifikant die Wirksamkeit von Herbiziden auch gegenüber dem kommerziellen Standard BREAK-THRU^{®} S240 verbesserte.

**Tabelle 2:**

| | **Behandlung** | **Wirksamkeit** | **Signifikanz¹** |
|---|---|---|---|
| **Vgl.** | **Ralon Super** | **89,0%** | **b** |
| **Bsp.** | **Ralon Super + 0,15 l/ha BREAK-THRU^{®} S240** | **91,3%** | **b** |
| **Bsp.** | **Ralon Super + 0,15 l/ha Verbindung der Formel 1 (gestartet mit 3,5,5 Trimethylhexanol)** | **96,0%** | **a** |

| | | | |
|---|---|---|---|
| ¹Werte mit dem gleichen Buchstaben sind statistisch nicht signifikant verschieden (P = 0,05; berechnet mit Student-Newman-Keuls Test mit der ARM7 Software von Gylling Data Management (www.GDMDATA.com)). | | | |

Aus dem Versuch kann geschlossen werden, dass das erfindungsgemäße Beispiel die Bekämpfung von Ungräsern fördert, während dieses bei dem kommerziellen Standard, Ralon Super allein, nur in geringerem Umfang der Fall war.

### Beispiel 2:

Gewächshausversuch: Einfluss unterschiedlicher Adjuvantien auf den Blattbefall von Gerste (Sorte "Hansa") mit *Blumeria graminis* f. sp. *hordei* im Vergleich zu der Wirkung des Handelsproduktes Amistar (Azoxystrobin) bei protektiver Anwendung.

Als Tankmischungsadditive wurden hier ein Produkt nach Formel 1, eine Mischung aus Verbindungen der Struktur gemäß Formel 1 und 2, wobei die Verbindung gemäß Formel 2 ein hydrophiles Polysiloxan ist, mit einem Mischungsverhältnis von 70:30 Gew.-%, zum kommerziellen Tankmischungsadditiv BREAK-THRU^{®} S240 verglichen.

### Versuchsaufbau:

Gerstepflanzen (3 Pflanzen/Gefäß) wurden drei Wochen in Frustorfer Erde kultiviert. Das Fungizid AMISTAR (Firma Syngenta; Wirkstoff azoxystrobin) wurde allein oder in Mischung mit Additiven mit Wasser verdünnt; 200 l/ha Spritzbrühe mit den unten angegebenen Produktmengen wurden mit einer Düse auf die Pflanzen gesprüht. 6 Stunden nach Applikation der ganzen Pflanzen mit den Versuchsprodukten wurden 7 cm lange Blattsegmente, beginnend von der Halmbasis, abgeschnitten und je 5 Blätter des jüngsten sowie zweitjüngsten Blattes auf Benzimidazolagar ausgelegt (0,5 % Agar, Zumischung von 40 ppm Benzimidazol nach dem Autoklavieren). Die Inokulation der Blätter erfolgte mit frischen Konidien von *Blumeria graminis* f. sp. *hordei* (Rasse A6) im Mehltau-Turm durch Windverteilung. Danach wurden die Blätter bei Raumtemperatur inkubiert. Die Menge der Präparate für die Blattapplikation an ganzen Pflanzen wurde auf 5 ml/ha eingestellt.

Die Wasseraufwandmenge war 250 l/ha, die Anwendungsmenge der Adjuvantien betrug 25 ml/ha. (Der Wirkstoff betrug damit 5 g/ha)

Nach 10 und 20 Tagen Inkubation bei Raumtemperatur wurde die Erkrankung der Blätter mit Mehltau untersucht, indem der Anteil an infizierter Blattfläche abgeschätzt wurde. Diese Versuchsanstellung ist dem Fachmann geläufig. Ergebnis: Nach 10 Tagen zeigte Amistar als Soloprodukt mit 35 % Befall eine moderate Wirkung gegen Mehltau (die unbehandelte Kontrolle hatte 93 % erkrankte Blattfläche). Der Befallsgrad bei Zusatz der Tankmischungsadditive zur Amistarspritzbrühe war wie folgt im Mittelwert:

| | |
|---|---|
| Mischprodukt aus Formel 1 und 2 | 1% |
| Formel 1 Produkt | 1% |
| BREAK-THRU^{®} S240 | 5% |

Alle geprüften Präparate mit Produkten der Formel 1 zeigten eine Wirkungsverbesserung von Amistar. 20 Tage nach Applikation hatte die Wirkung von Amistar als Soloprodukt weiter nachgelassen, wie der Befallsgrad von 51 % dokumentiert. Unter diesen Bedingungen war jedoch bei dem Mischprodukt aus Formel 1 und 2 und auch bei dem Produkt nach Formel 1 sowie dem BREAK-THRU^{®} S240 noch eine bemerkenswerte Wirkungsverbesserung von Amistar zu beobachten, wie aus den Befallsgraden ersichtlich ist:

| | |
|---|---|
| Mischprodukt aus Formel 1 und 2 | 32% |
| Formel Produkt | 28% |
| BREAK-THRU^{®} S240 | 17% |

## Patentansprüche

1. Verwendung von alkoxylierten Alkoholen der Formel 1
R¹O(SO)ₐ(PO)_{b}(EO)_{c}(BO)_{d}R² (Formel 1)
wobei
SO = styryloxy = -CH(C₆H₅)-CH₂-O- oder -CH₂-CH(C₆H₅)-O-,
PO = propylenoxy = -CH(CH₃)-CH₂-O- oder -CH₂-CH(CH₃)-O-,
EO = ethylenoxy = -CH₂-CH₂-O-,
BO = butylenoxy = -CH₂-CH₂-CH₂-CH₂-O-,
a = 0,
b = 2 bis 3,
c = 2 bis 4,5,
d = 0 und
R¹ ein 3,5,5-Trimethylhexyl-Radikal darstellt
R² gleich einem Wasserstoffradikal ist,
als Tankmischungsadditiv für Pflanzenschutzmittelformulierungen.

2. Verwendung eines Additives nach Anspruch 1 zusammen mit einem oder mehreren Pflanzenschutzmitteln in Tankmischungen.

3. Verwendung eines Additives nach Anspruch 1 zusammen mit einem oder mehreren Pflanzenschutzmitteln in Tankmischungen zum Ausbringen bevorzugt auf Gräsern und Getreide.

4. Verwendung nach Anspruch 1, **dadurch gekennzeichnet, dass** das Tankmischungsadditiv zusammen mit Herbiziden, Fungiziden oder Insektiziden eingesetzt wird.

5. Zusammensetzung enthaltend Verbindungen nach Formel 1, als Additive für Tankmischungen zu Pestiziden, Pestizidmischungen oder Pflanzenschutzmittel.

6. Zusammensetzung nach Anspruch 5, **dadurch gekennzeichnet, dass** die Zusammensetzung neben Verbindungen der Formel 1 noch Polysiloxane der allgemeinen Formel 2 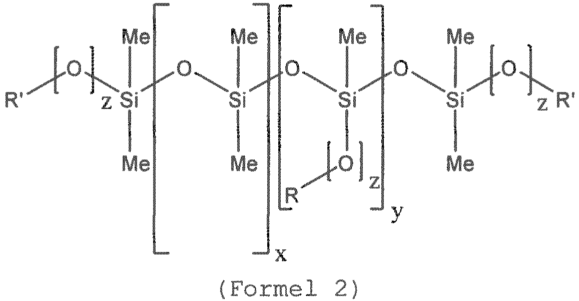 wobei
z = 0 oder 1,
x = 0 bis 100,
y = größer oder gleich 0,
R'= R oder ein Alkylrest mit 1 bis 8 Kohlenstoffatomen oder ein Wasserstoffatom ist,
R= CₙH₂ₙO(CₑH₂ₑO)ₚK,
n = 3 bis 4,
e = gleich oder unterschiedlich 2 bis 4,
p = größer gleich 3,
K = gleich einem Wasserstoffatom, ein Alkylrest mit 4 oder weniger Kohlenstoffatomen ist
enthält.

7. Zusammensetzung nach Anspruch 6, **dadurch gekennzeichnet, dass** das Masse-Mischungsverhältnis der Komponenten 90:10 bis 10:90 beträgt.

8. Verwendung der Zusammensetzungen nach Anspruch 6 oder 7 als Tankmischungsadditive für Herbizide, Fungizide oder Insektizide in der Blattapplikation.

9. Verwendung der Zusammensetzungen nach Anspruch 6 oder 7 zusammen mit Mikronährstoffen.

10. Verwendung nach Anspruch 9, **dadurch gekennzeichnet, dass** als Mikronährstoffe Eisendünger, Stickstoffdünger, und/oder Spurenelementnährstoffe auf Basis von Cu, Fe, Zn, Mn, die als Oxide, Sulfate oder Carbonate vorliegen, verwendet werden.

## Claims

1. The use of alkoxylated alcohols of Formula 1
R¹O(SO)ₐ(PO)_{b}(EO)_{c}(BO)_{d}R² (Formula 1)
where
SO =styryloxy = -CH(C₆H₅)-CH₂-O- or -CH₂-CH(C₆H₅) -O-,
PO =propyleneoxy = -CH(CH₃)-CH₂-O- or -CH₂-CH(CH₃)-O-,
EO =ethyleneoxy = -CH₂-CH₂-O-,
BO =butyleneoxy = -CH₂-CH₂-CH₂-CH₂-O-,
a = 0,
b = 2 to 3,
c = 2 to 4.5,
d = 0 and
R¹ is a 3,5,5-trimethylhexyl radical,
R² is a hydrogen radical,
as tank mixture additive for crop protection composition formulations.

2. The use of an additive according to claim 1 together with one or more crop protection compositions in tank mixtures.

3. The use of an additive according to claim 1 together with one or more crop protection compositions in tank mixtures for application preferably to grasses and cereals.

4. The use according to claim 1, **characterized in that** the tank mixture additive is used together with herbicides, fungicides or insecticides.

5. A composition comprising compounds according to Formula 1, as additives for tank mixtures to pesticides, pesticide mixtures or crop protection compositions.

6. A composition according to claim 5, **characterized in that** the composition, in addition to compounds of Formula 1, also contains polysiloxanes of general Formula 2 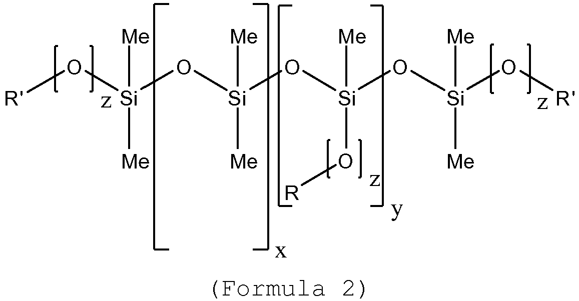 where
z = 0 or 1,
x = 0 to 100,
y = greater than or equal to 0,
R'= R or an alkyl radical having 1 to 8 carbon atoms or a hydrogen atom,
R = CₙH₂ₙO(CₑH₂ₑO)ₚK,
n = 3 to 4,
e = identical or different 2 to 4,
p = greater than or equal to 3,
K = a hydrogen atom, an alkyl radical having 4 or fewer carbon atoms.

7. A composition according to claim 6, **characterized in that** the mass mixing ratio of the components is 90:10 to 10:90.

8. The use of the composition according to claim 6 or 7 as tank mixture additive for herbicides, fungicides or insecticides in leaf application.

9. The use of the composition according to claim 6 or 7 together with micronutrients.

10. The use according to claim 9, **characterized in that** the micronutrients used are iron fertilizers, nitrogen fertilizers, and/or trace element nutrients based on Cu, Fe, Zn, Mn, which are in the form of oxides, sulphates or carbonates.

## Revendications

1. Utilisation, en tant qu'additif pour mélange en cuve pour des formulations de produits phytosanitaires, d'alcools alcoxylés de formule 1
R¹O(SO)ₐ(PO)_{b}(EO)_{c}(BO)_{d}R² (Formule 1)
dans laquelle
SO = styryloxy = -CH(C₆H₅)-CH₂-O- ou -CH₂-CH(C₆H₅)-O-,
PO = propylènoxy = -CH(CH₃)-CH₂-O- ou -CH₂-CH(CH₃)-O-,
EO = éthylènoxy = -CH₂-CH₂-O-,
BO = butylènoxy = -CH₂-CH₂-CH₂-CH₂-O-,
a = 0,
b = 2 à 3,
c = 2 à 4,5,
d = 0, et
R¹ représente un radical 3,5,5-triméthylhexyle,
R² désigne un radical hydrogène.

2. Utilisation d'un additif selon la revendication 1, en même temps que d'un ou plusieurs agents phytosanitaires dans des mélanges en cuve.

3. Utilisation d'un additif selon la revendication 1, en même temps que d'un ou plusieurs agents phytosanitaires dans des mélanges en cuve, pour épandage de préférence sur des graminées et des céréales.

4. Utilisation selon la revendication 1, **caractérisée en ce que** l'additif pour mélange en cuve est utilisé en même temps que des herbicides, des fongicides ou des insecticides.

5. Composition contenant des composés de formule 1 en tant qu'additifs pour mélanges en cuve à des pesticides, des mélanges de pesticides ou des produits phytosanitaires.

6. Composition selon la revendication 5, **caractérisée en ce que** la composition contient encore, outre des composés de formule 1, des polysiloxanes de formule générale 2 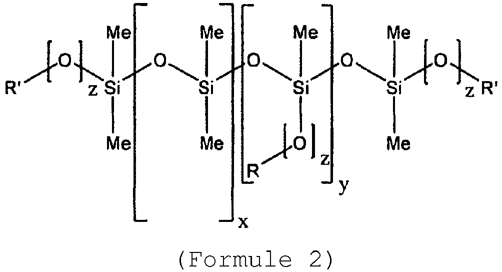 dans laquelle
z = 0 ou 1,
x = 0 à 100,
y = est supérieur ou égal à 0,
R' = R ou un radical alkyle ayant 1 à 8 atomes de carbone, ou un atome d'hydrogène,
R = CₙH₂ₙO(CₑH₂ₑO)ₚK,
n = 3 à 4,
e = est identique ou différent et vaut 2 à 4,
p = est supérieur ou égal à 3,
K = est un atome d'hydrogène, un radical alkyle ayant 4 atomes de carbone ou moins.

7. Composition selon la revendication 6, **caractérisée en ce que** le rapport de mélange des composants est, en masse, de 90:10 à 10:90.

8. Utilisation des compositions selon la revendication 6 ou 7 en tant qu'additifs pour mélanges en cuve pour herbicides, fongicides ou insecticides en application foliaire.

9. Utilisation des compositions selon la revendication 6 ou 7, en même temps que de micronutriments.

10. Utilisation selon la revendication 9, **caractérisée en ce qu'**on utilise en tant que micronutriments des engrais ferreux, des engrais azotés et/ou des nutriments oligo-élémentaires à base de Cu, de Fe, de Zn, de Mn, qui se présentent sous forme d'oxydes, de sulfates ou de carbonates.
